# EUROPÄISCHE PATENTANMELDUNG

(11) **EP 0 613 871 A1**
(43) Veröffentlichungstag der Anmeldung: **07.09.1994**
(21) Anmeldenummer: 94102094.3
(22) Anmeldetag: 11.02.1994
(51) Int. Cl.: C05F 17/02

(54) **Kompostierungskammer für biologisch abbaubare Haus- und Gartenabfälle**

(30) Priorität: 02.03.1993 DE 4306434
(71) Anmelder: Fritz Schäfer Gesellschaft mit beschränkter Haftung, D-57290 Neunkirchen (DE)
(72) Erfinder: Schäfer, Gerhard, D - 57290 Neunkirchen (DE); Kowald, Prof. Dr. Rainer, D - 59555 Lippstadt (DE)
(74) Vertreter: Müller, Gerd, Dipl.-Ing.

(57) **Zusammenfassung**

Es ist eine Kompostierungskammer 1 für biologisch abbaubare Küchen-, Haus- und Gartenabfälle vorgeschlagen, die aus einem in das belebte Erdreich eingrabbaren unteren Behälterteil 2 und aus einem über das Oberflächenniveau des Erdreiches hochragenden, oberen Behälterteil 3 besteht, wobei der obere Behälterteil 3 lösbar auf den unteren Behälterteil 2 aufgesetzt ist und oben eine durch einen abnehmbaren Deckel 25 oder dergleichen verschließbare Einfüllöffnung hat, während der untere Behälterteil 2 wenigstens bereichsweise zum umgebenden Erdreich hin für Kleinlebewesen, Feuchtigkeit und Luft mit Durchlässen 8 versehen ist.

Zwecks Verbesserung der Wirkungsweise der Kompostierungskammer 1 weist der untere Behälterteil 2 einen geschlossenen Boden 5 auf und sein Mantel 6 ist erst mit einem Mindestabstand 7 oberhalb dieses Bodens 5 mit Durchlässen 8 versehen. In den unteren Behälterteil 2 ist ein Zusatzbehälter oder Korb 4 einzusetzen, der einen durchlässigen Boden 13 und einen ebenfalls durchlässigen Mantelbereich 16 hat. Der Zusatzbehälter oder Korb 4 ist wenigstens teilweise mit seinem durchlässigen Mantelbereich 16 an den durchlässigen Mantelbereich 8 des unteren Behälterteils 2 anlegbar und der bodennahe Bereich des unteren Behälterteils 2 bildet eine Flüssigkeitssammel- und/oder -speicherwanne 9.

## Beschreibung

Bei der Kompostierung soll die organische Konstanz von Küchen-, Haus- und Gartenabfällen durch Kleinlebewesen, durch Mikroorganismen und durch chemische Prozesse in Humus umgewandelt werden. Gleichzeitig sollen aber auch partogene Keime und Unkrautsamen durch die von dem Mikroorganismen erzeugte Selbsterhitzung abgetötet werden. Voraussetzung für die optimale Kompostierung ist es daher, günstige Lebensbedingungen für die an den Umsetzungsprozessen beteiligten Lebewesen zu schaffen.

Zwei Organismengruppen sind an dem Ab- und Umbau der organischen Substanz beteiligt. Kleinlebewesen wie Asseln, Würmer, Springschwänze und Milben zerkleinern die organische Substanz. Diese Tiere leben im Boden und zwar in unterschiedlichen Tiefen und müssen daher von dort in das zu kompostierende Material einwandern. Durch Mikroorganismen wie Bakterien, Aktinomyceten und Pilze wird die organische Substanz ab- und umgebaut. Zur Vermeidung von Geruchsbelästigungen und Stickstoffverlusten sowie zur Erzielung einer Selbsterhitzung muß dieser Ab- und Umbau im aeroben Milieu stattfinden, das heißt, das organische Material muß ständig mit Sauerstoff versorgt, also genügend durchlüftet werden. Bei hoher Feuchtigkeit und dichter Lagerung kommt es aufgrund einer ungenügenden Durchlüftung des Materials zu anaeroben Verhältnissen.

Andererseits besteht bei länger anhaltender Trockenheit die Gefahr, daß das organische Material austrocknet. Sinkt dabei der Feuchtigkeitsgehalt dieses Materials unter 30 %, dann kommt der Stoffwechsel der Mikroorganismen zum Erliegen, weil diese ihre Nahrung nur in gelöster Form aufnehmen können. Die Folge davon ist dann, daß die organischen Substanzen nicht weiter abgebaut werden.

Wie bereits erwähnt wurde, muß das zu kompostierende Material genügend durchlüftet werden, damit die den Abbau der organischen Substanz bewirkenden Aerobiern immer genügend Sauerstoff zur Verfügung haben. Dabei hängt die Intensität des Abbaus der organischen Substanz von der Aktivität der Mikroorganismen und diese wiederum von der Temperatur ab. Durch die Tätigkeit der Mikroorganismen kommt es zu einer Selbsterhitzung des organischen Materials, wobei dessen optimale Temperatur etwa 45° C beträgt. Höhere Temperaturen - über 60 °C - sind vorallem für die Hygenisierung, das heißt, die Abtötung der partogenen Keime und Unkrautsamen unerläßlich.

Um allen diesen Bedingungen Rechnung tragen zu können, ist bereits die Benutzung bzw. der Einsatz sogenannter Komposter vorgeschlagen worden, die in offener, halboffener und geschlossener Bauart zur Verfügung stehen.

In allen Fällen wird der sogenannte Rotteprozess von den Faktoren Temperatur, Sauerstoff und Wassergehalt beeinflußt, wobei die Bauart der Komposter über diese Faktoren auf den Kompostierungsverlauf einwirken.

Gegenstand der Erfindung ist ein Komposter der halboffenen Bauart, nämlich eine Kompostierungskammer für biologisch abbaubare Küchen-, Haus- und Gartenabfälle, bestehend aus einem in das belebte Erdreich eingrabbaren, unteren Behälterteil und aus einem über das Oberflächenniveau des Erdreichs hochragenden, - als Haube gestalteten - oberen Behälterteil, wobei der obere Behälterteil oben eine durch einen abnehmbaren Deckel oder dergleichen verschließbare Einfüllöffnung für das kompostierfähige Material hat, während der untere Behälterteil wenigstens bereichsweise zum umgebenden Erdreich hin für Kleinlebewesen, Feuchtigkeit und Luft durchlässig ist.

Kompostierungskammern dieser Art sind bereits bekannt durch die US-A-3 708 085 und durch die EP-A-0 449 927.

Gegenüber anderen bekannten Kompostern haben die Kompostierungskammern nach dem vorgenannten Stand der Technik den Vorteil, daß sie teilweise von den oberen Bodenschichten des Erdreichs umhüllt sind und daher nicht nur das Einwandern der Kleinlebewesen, wie Asseln, Würmer, Springschwänze und Milben, in das Kammerinnere begünstigen, sondern darüberhinaus einem schnellen Abführen der durch die Aktivität der Mikroorganismen entstehende Wärme nach außen - vorallem in den kälteren Jahreszeiten - entgegenwirken.

Es hat sich jedoch in der Praxis gezeigt, daß bei den Kompostierungskammern der gattungsgemäßen Art sowohl der Feuchtigkeitshaushalt als auch der Sauerstoffhaushalt nur unvollkommen beeinflußt werden kann. Bei zu hohem Feuchtigkeitsgehalt stellen sich dann als Folgen anaerobe Verhältnisse mit den nachteiligen Geruchsbelastungen ein, während bei einem Feuchtigkeitsgehalt von weniger als 30 % der Stoffwechsel der Mikroorganismen zum Erliegen kommt, die organische Substanz also nicht mehr weiter abgebaut wird.

Durch zu geringe Sauerstoffzufuhr wird das Entstehen anaerober Verhältnisse begünstigt, weil den Aerobiern der zu ihrer Aktivität nötige Sauerstoff nicht verfügbar ist, während eine zu hohe Sauerstoffzufuhr eine Austrocknung des organischen Materials zur Folge hat, so daß den Mikroorganismen keine Nahrung in gelöster Form zur Verfügung steht und in der Folge ihr Stoffwechsel zum Erliegen kommt, womit dann die organische Substanz nicht mehr abgebaut wird.

Ziel der Erfindung ist es, die den Kompostierungskammern der genannten Gattung anhaftenden Unzulänglichkeiten auszuräumen. Deshalb liegt ihr die Aufgabe zugrunde, eine Bau- und Funktionsweise für eine solche Kompostierungskammer anzugeben, die einerseits den Feuchtigkeitshaushalt der biologisch abbaubaren Küchen-, Haus- und Gartenabfälle optimiert, zugleich aber auch die Sauerstoffzufuhr perfektioniert.

Gelöst wird diese Erfindungsaufgabe mit den Kennzeichnungsmerkmalen des Anspruchs 1, also dadurch,
- daß der untere Behälterteil einen geschlossenen Boden aufweist und sein Mantel erst mit einem Mindestabstand oberhalb dieses Bodens durchlässig ausgeführt ist,
- daß in den unteren Behälterteil ein Zusatzbehälter oder Korb herausnehmbar einzusetzen ist, der einen durchlässigen Boden und einen ebenfalls durchlässigen Mantelbereich hat,
- daß der Zusatzbehälter oder Korb wenigstens teilweise mit seinem durchlässigen Mantelbereich an den durchlässigen Mantelbereich des unteren Behälterteils anlegbar ist,
- und daß der bodennahe Bereich des unteren Behälterteils eine Flüssigkeitsammel- und/oder -speicherwanne bildet.

Die Nutzung dieser Ausbildungsmaßnahmen hat zur Folge, daß einerseits aus der in die Kompostierungskammer eingefüllten Biomasse Flüssigkeiten (Wasser, Säfte o.ä.) nach unten entweichen und dort aufgefangen und gesammelt werden können. Andererseits kann aber die gesammelte Flüssigkeit aber auch wieder eine Rückbefeuchtung des organischen Material bewirken, falls dieses unter der Wirkung äußerer Einflüsse über einen Mindestwert hinaus auszutrocknen beginnt.

Bewährt hat es sich nach der Erfindung, wenn gemäß Anspruch 2 der Zusatzbehälter oder der Korb mit seinem Boden oberhalb der Flüssigkeitssammel- und/oder -speicherwanne gehalten ist und/oder die Flüssigkeitsammel- und/oder -speicherwanne einen unterhalb dieses Bodens gelegenen Überlauf aufweist.

Mit diesen Maßnahmen wird sichergestellt, daß aus der Biomasse absinkende Flüssigkeit (Wasser, Säfte o.ä.) nicht nur in einer für eine notwendige Rückbefeuchtung ausreichenden Menge gesammelt und bereitgehalten wird, sondern daß zugleich auch ein direkter bzw. unmittelbarer Berührungskontakt des organischen Materials mit der gesammelten Flüssigkeit vermieden wird.

Um den Feuchtigkeitshaushalt des eingebrachten organischen Materials im Sinne einer Optimierung zu beeinflussen, wird ein Wesensmerkmal der Erfindung nach Anspruch 3 auch darin gesehen, daß der Zusatzbehälter oder Korb mit mindestens einer sich in seiner Höhenrichtung erstreckenden Luftführung, z. B. einem mittleren und/oder mehreren am Umfang liegenden Kanälen, ausgestattet ist, die sich durch seinen Boden bis über die Flüssigkeitssammel- und/oder -speicherwanne erstreckt bzw. erstrecken. Es kann auf diese Art und Weise nämlich Luft von oberhalb des Oberflächennivaus des Erdreiches am Zusatzbehälter oder Korb entlang auf die in der Flüssigkeitssammel- und/oder -speicherwanne anstehende Flüssigkeit einwirken, so daß sie angefeuchtet wird, bevor sie von unten her in das im Zusatzbehälter oder Korb aufgenommene organische Material eindringt.

Bewährt hat es sich erfindungsgemäß auch, wenn gemäß Anspruch 4 der Zusatzbehälter oder Korb am unteren Behälterteil über jeweils deren Oberrand zugeordnete Kragen und/oder Abstandshalter abstützbar ist. Einem unerwünschten Festsetzen des Zusatzbehälters oder Korbs im unteren Behälterteil wird dadurch auf einfache Art und Weise vermieden.

Zur besseren bzw. leichteren Handhabung ist nach Anspruch 5 der Zusatzbehälter oder Korb an seinem oberen Rand mit Handgriffen versehen.

Die durchlässigen Bereiche des unteren Behälterteils und des Zusatzbehälters oder Korbs können nach Anspruch 6 aus Stab- oder Steggittern bestehen.

Erfindungsgemäß sieht Anspruch 7 auch noch vor, daß die Flüssigkeitssammel- und/oder -speicherwanne im unteren Behälterteil durch Rippen oder Stege in mehrere nebeneinanderliegende Bereiche unterteilt ist, die ein den Boden durchdringendes Zentralrohr als gemeinsamen Überlauf haben.

Wenigstens der Zusatzbehälter oder der Korb kann ferner nach Anspruch 8 mit dem haubenartigen, oberen Behälterteil durch Verschlußmittel, z. B. Bajonett- oder Klapphebelverschlüsse lösbar gekuppelt werden.

In baulicher Hinsicht ist vorgesehen, daß wenigstens der haubenartige, obere Behälterteil gemäß Anspruch 9 die Form eines sich nach oben verjüngenden Kegelstumpfes hat und daß nach Anspruch 10 der abnehmbare Deckel des oberen Behälterteils mit Luftdurchlaßöffnungen versehen ist, die durch einen Drehverschluß, z. B. eine Drehrosette, öffen- und schließbar, sowie in ihrem Durchlaßquerschnitt variierbar sind.

Der untere Behälterteil, wie auch der Zusatzbehälter oder Korb können nach Anspruch 11 die Form eines sich nach unten verjüngenden Kegelstumpfes aufweisen.

In manchen Fällen ist es schließlich noch zu empfehlen, gemäß Anspruch 12 die Luftführungen bzw. Kanäle des Zusatzbehälters oder Korbs mit oberhalb des Erdreichs gelegenen Lufteinlässen, z. B. des unteren Behälterteils, in Verbindung zu bringen.

Obwohl es durchaus möglich ist, die Einzelelemente einer erfindungsgemäßen Kompostierungskammer aus korrosionsfesten metallischen Werkstoffen zu fertigen, hat es sich als besonders vorteilhaft erwiesen, zu deren Herstellung wiederverwertbares bzw. recyclingsfähiges Kunststoffmaterial einzusetzen. Mit Hilfe geeigneter Spritzgießwerkzeuge lassen sich dann der untere Behälterteil, der obere Behälterteil, wie auch der Zusatzbehälter oder Korb jeweils als einstückige Formteile fertigen.

In der Zeichnung ist ein Ausführungsbeispiel des Gegenstandes der Erfindung dargestellt. Es zeigen:
- Figur 1: in schematisch vereinfachter Sprengdarstellung und Seitenansicht, die wesentlichen Bau- und Funktionsteile einer Kompostierungskammer,
- Figur 2: wiederum schematisch vereinfacht eine Draufsicht in Pfeilrichtung II auf den unteren Behälterteil der Kompostierungskammer nach Figur 1,
- Figur 3: in schematisch vereinfachter Darstellung eine Draufsicht in Pfeilrichtung III auf einen Zusatzbehälter oder Korb der Kompostierungskammer nach Figur 1,
- Figur 4: wiederum schematisch vereinfacht eine Draufsicht auf den oberen Behälterteil der Kompostierungskammer nach Figur 1,
- Figur 5: den oberen Behälterteil der Kompostierungskammer nach Figur 1 im Längsschnitt und
- Figur 6: den oberen Abschnitt des oberen Behälterteils, welches die Verbindung zwischen einem Deckel und dem oberen Behälterteil zeigt.

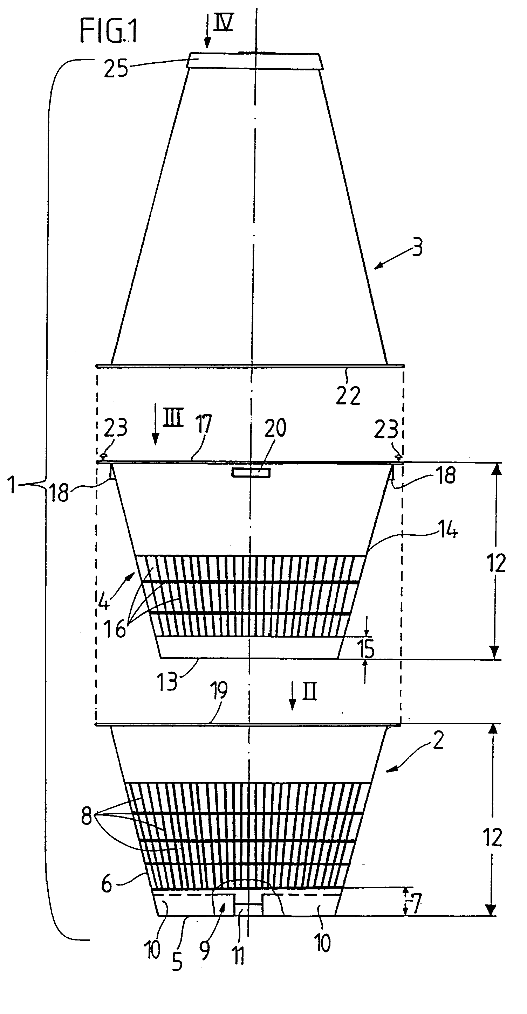

In Figur 1 der Zeichnung ist in Seitenansicht eine Kompostierungskammer 1 für biologisch abbaubare Küchen-, Haus- und Gartenabfälle zu sehen. Diese weist einen unteren Behälterteil 2 auf, welcher in die oberen Schichten des belebten Erdreichs eingegraben werden kann. Ferner hat sie einen oberen, nach Art einer Haube gestalteten, Behälterteil 3, welcher insgesamt über das Oberflächenniveau des Erdreiches hochragt.

Ein wesentlicher weiterer Bestandteil der Kompostierungskammer 1 ist ein Zusatzbehälter oder Korb 4, welcher sich vom Oberflächenniveau des Erdreiches aus herausnehmbar in den unteren Behälterteil 2 einsetzen läßt. Auf den Zusatzbehälter oder Korb 4 ist der als Haube gestaltete obere Behälter 3 lösbar aufgesetzt.

Bei dem in Figur 1 dargestellten Ausführungsbeispiel einer Kompostierungskammer 1 weist der untere Behälterteil 2 wie auch der Zusatzbehälter oder Korb 4 jeweils die Form eines sich nach unten verjüngenden Kegelstumpfes aus. Hingegen ist der haubenartige, obere Behälterteil 3 in diesem Falle als ein sich nach oben verjüngender Kegelstumpf vorgesehen.

Der untere Behälterteil 2 weist einen geschlossenen Boden 5 auf, während sein kegelförmiger Mantel 6 beginnend mit einem Mindestabstand 7 oberhalb diese Bodens 5 für Kleinlebewesen, feuchtigkeits- und luftdurchlässig ausgebildet, bspw. rundum mit einem Stab- oder Steggitter 8 versehen ist. Anstelle des Stab- oder Steggitters 8 können aber auch Löcher oder Schlitze in größerer Anzahl im kegelförmigen Mantel 6 vorgesehen werden.

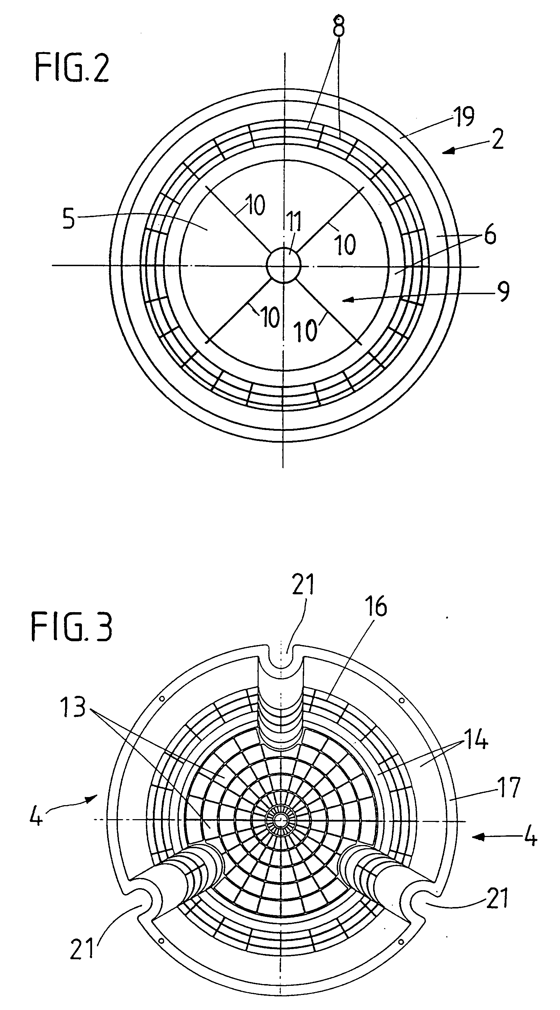

Der bodennahe Bereich des unteren Behälterteils 2 läßt sich wegen des über den Mindestabstand 7 hinweg völlig geschlossenen, kegelförmigen Mantels 6 als eine Flüssigkeitssammel- und/oder -speicherwanne 9 nutzen. Diese ist durch radiale Rippen 10 in mehrere, bspw. vier, Sektoren unterteilt, wie das besonders deutlich die Figur 2 zeigt. Im Zentrum des Bodens 5 enden die Rippen oder Stege 10 an einem den Boden 5 durchdringenden Zentralrohr 11, das einen gemeinsamen Überlauf für alle vier durch die Rippen oder Stege 10 gegeneinander abgeteilten Sektorbereiche der Flüssigkeitssammel- und/oder -speicherwanne 9 bildet.

In Figur 1 ist zu sehen, daß die Höhe der Stege oder Rippen 10 die Höhe des Zentralrohres 11 und damit des hiervon gebildeten Überlaufrohres übersteigt. Damit wird die maximale Füllhöhe in der Flüssigkeitssammel- und/oder -speicherwanne 9 allein durch die Höhe des Zentralenrohres 11 bestimmt.

Wenn die Unterkante des feuchtigkeits- und luftdurchlässigen Bereichs am unteren Behälter 2 tiefer liegt als der Boden 13 des eingesetzten Zusatzbehälters oder Korbs 4, dann kann das als Überlauf dienende Zentralrohr 11 auch entfallen. Überschüssiges Wasser kann dann nämlich seitlich nach außen aus dem Behälter teil 2 in den Boden abfließen.

Der Zusatzbehälter oder Korb 4 kann heraushebbar in den unteren Behälterteil 2 der Kompostierungskammer 1 so eingesetzt werden, daß er mit seinem Boden auf die Oberkanten der Rippen oder Stege 10 trifft und dann hierauf ruht. Der konische Mantel 14 des Zusatzbehälters oder Korbes 4 ist in seiner Formgebung an den konischen Mantel 6 des unteren Behälterteiles 2 so angepaßt, daß er mit seiner Außenfläche dicht an der Innenfläche des letzteren zur Anlage kommt, sobald der Boden 13 auf die Oberkante der Rippen oder Stege 10 trifft. Dabei hat auch der konische Mantel 14 des Zusatzbehälters oder Korbes 4, beginnend mit einem Mindestabstand 15 von seinem Boden 13 einen aus Stab- oder Steggittern 16 oder dergleichen gebildeten, für Kleinlebewesen, feuchtigkeits- und luftdurchlässigen Bereich. Wichtig ist, daß beide Stab- oder Steggitter 8 und 16 oder dergleichen miteinander in Lagenübereinstimmung kommen, wenn der Zusatzbehälter oder Korb 4 in den unteren Behälterteil 2 eingesetzt ist.

Wie sich der Figur 3 entnehmen läßt, ist bei dem Zusatzbehälter oder Korb 4 nicht nur ein Höhen-Teilbereich des konischen Mantels 14 als Stab- oder Steggitter 16 ausgeführt, sondern auch sein Boden hat eine als Steggitter gestaltete Ausbildung und ist somit durchlässig ausgeführt.

In Figur 1 der Zeichnung ist noch zu sehen, daß der Zusatzbehälter oder Korb 4 an seinem konischen Mantel 14 unterhalb eines an seinem oberen Ende ausgebildeten, radialen Kragens mit Stapelrippen 18 versehen ist, die sich stützend auf die Oberseite eines Kragens 19 setzen können, welcher sich am oberen Ende des unteren Behälterteils 2 befindet. Es wird hierdurch auf einfache Weise vermieden, daß sich der Zusatzbehälter oder Korb 4 in unerwünschter Weise im unteren Behälterteil 2 festsetzen kann. Unterhalb des Kragens 17 weist der Zusatzbehälter oder Korb 4 noch Handgriffe 20 auf, die sein Einsetzen und Herausheben gegenüber dem unteren Behälterteil 2 wesentlich erleichtern können.

Aus Figur 3 der Zeichnung ist noch ersichtlich, daß der Zusatzbehälter oder Korb 4 mit sich in seiner Höhenrichtung erstreckenden Luftführungen ausgestattet ist, von denen jede aus einem am Umfang des Mantels 14 gelegenen Kanal 21 besteht. Nach Figur 3 sind drei solcher Kanäle 21 am Umfang des Mantels 14 verteilt vorgesehen und gewissermaßen tunnelartig in den Mantel 14 hineingeformt. Durch diese Kanäle 21 hindurch kann eine Luftbewegung auch dann stattfinden, wenn der Zusatzbehälter oder Korb 4 in den unteren Behälterteil 2 der Kompostierungskammer 1 eingesetzt ist. Diese Luft kann dabei auch den Flüssigkeitsspiegel in der Flüssigkeitssammel- und/oder -speicherwanne 9 des unteren Behälterteils 2 bestreichen und hiervon Feuchtigkeit aufnehmen, welche dann zusammen mit der Luft durch den durchlässigen Boden 13 des Zusatzbehälters oder Korb 4 hochsteigt und damit in die organische Substanz der biologisch abbaubaren Stoffe gelangt. Gemäß Figur 3 sind die Luftführungskanäle 21 so gestaltet, daß in ihrem Bereich keine Berührung des Zusatzbehälters oder Korbes 4 mit dem Behälterteil 2 stattfinden kann, wenn ersterer in letzteren eingesetzt wird.

Der nach Art einer Haube gestaltete obere Behälterteil 3 hat an seinem unteren Ende einen Kragen 22, welcher insbesondere zu dem Kragen 17 des Zusatzbehälters oder Korbes 4, aber auch zu dem Kragen 19 des unteren Behälterteils 2 paßt. Während durch die Stapelrippen 18 beim Zusammenbau der Kompostierungskammer 1 zwischen den Kragen 17 und 19 ein gewisser Abstand eingehalten wird, legt sich der Kragen 22 des oberen Behälterteils 3 auf den Kragen 17 des Zusatzbehälters oder Korbes 4 unmittelbar auf. Vom Kragen 17 hochragende Pilzzapfen 23 können dabei mit schlüssellochartig gestalteten Schlitzen 24 im Kragen 22 als Bajonettverschlüsse in Wirkverbindung treten, um dadurch einen formschlüssigen aber lösbaren Zusammenhalt zwischen dem oberen Behälterteil 3 sowie dem Zusatzbehälter oder Korb 4 der Kompostierungskammer 1 herbeizuführen.

Anstelle der Bajonettverschlüsse 23/24 können auch sogenannte Klapphebelverschlüsse in Benutzung genommen werden, um die wesentlichen Funktionsteile der Kompostierungskammer 1 lösbar miteinander zu kuppeln.

In jedem Fall ist es möglich, den oberen Behälterteil 3 zusammen mit dem Zusatzbehälter oder Korb 4 vom unteren Behälterteil 2 abzuheben.

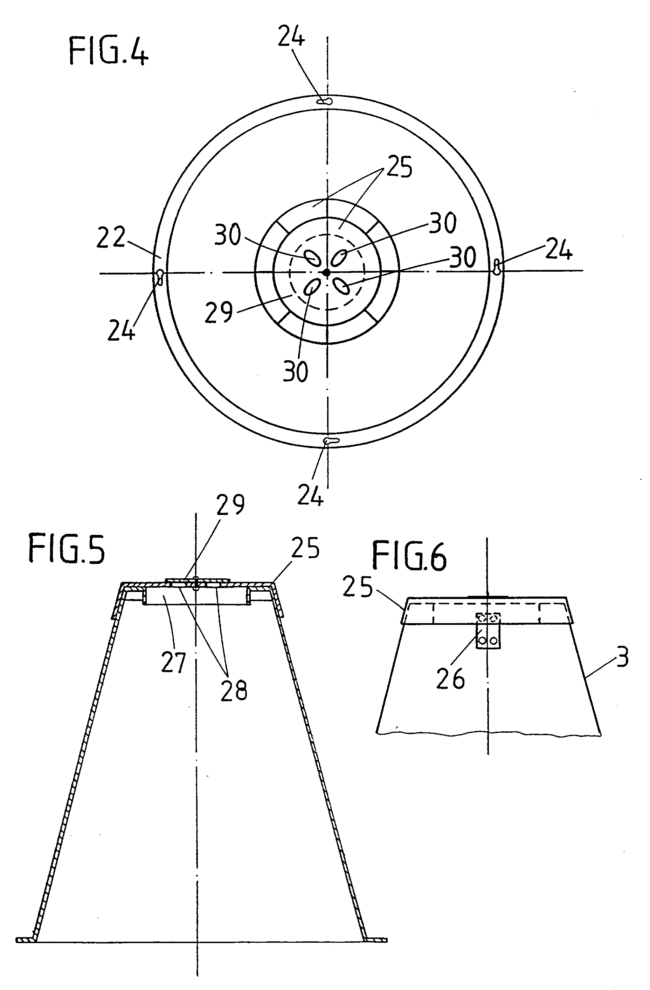

Den Figuren 1 und 4 bis 6 ist zu entnehmen, daß der obere Behälterteil 3 der Kompostierungskammer 1 mit einem Deckel 25 ausgestattet ist, der bspw. über ein Scharniersystem oder eine Biegelasche 26 mit dem oberen Behälterteil 3 in Verbindung steht. Mit diesem Deckel 25 wird normalerweise eine Öffnung 27 verschlossen, die den Einwurf für die biologisch abbaubaren Küchen-, Haus- und Gartenabfälle bildet. Da der Deckel 25 normalerweise immer geschlossen ist, eine ständige Luftzirkulation durch die Kompostierungskammer 1 aber gewünscht wird, ist es wichtig, daß der Deckel 25 Luftdurchlaßöffnungen 28 aufweist, die durch einen Drehverschluß 29, z. B. eine Drehrosette bedarfsweise geöffnet und geschlossen, wie auch in ihrem Durchlaßquerschnitt variiert werden können. Hierzu weist der Drehverschluß 29 Durchbrüche 30 auf, welche entweder mit den Löchern 28 im Deckel 25 mehr oder weniger in Deckungslage gebracht oder aber gänzlich aus deren Bereich verlagert werden können.

Der im wesentlichen dreiteilige Grundaufbau einer Kompostierungskammer 1 der vorbeschriebenen Art hat nicht nur den Vorteil, daß sich Feuchtigkeitshaushalt und Sauerstoffzufuhr für die eingelagerten biologisch abbaubaren Küchen-, Haus- und Gartenabfälle wesentlich verbessern lassen. Vielmehr wird durch das Vorhandensein des Zusatzbehälters oder Korbes 4 auch das Entladen des verrotteten Humus wesentlich erleichtert.

Abschließend sei nur noch erwähnt, daß es auch möglich ist, den Zusatzbehälter oder Korb 4 in der Mitte seines Bodens mit einem axial hochragenden Kanal zur Luftführung auszustatten. Dieser kann für sich allein aber auch zusätzlich zu den drei Kanälen 21 vorhanden sein.

Bei großer Trockenheit kann durch die Luftführungskanäle 21 Wasser in die Wanne 9 nachgefüllt werden. Bei Austrocknung des zu kompostierenden Materials kann dies aber auch unmittelbar mit Wasser begossen werden. Die Gefahr einer Anaerobie besteht dabei nicht, da das überschüssige Wasser abtropfen kann.

Der obere Behälterteil 3 sollte konisch sein, damit beim Sacken des zu kompostierenden Materials ein Belüftungsspalt zwischen seiner Wandung und dem Material besteht. Ein solcher Spalt würde aber auch dann bestehen, wenn der obere Behälterteil 3 senkrechte Wände mit innenseitigen Stegen hat, die als Distanzhalter wirken.

### Liste der Bezugszeichen

- 1: Kompostierungskammer
- 2: unterer Behälterteil
- 3: oberer Behälterteil
- 4: Zusatzbehälter oder Korb
- 5: Boden
- 6: Mantel
- 7: Mindestabstand
- 8: Stab- oder Steggitter
- 9: Flüssigkeitssammel- und/oder -speicherwanne
- 10: Rippen oder Stege
- 11: Zentralrohr
- 12: Bauhöhe
- 13: Boden
- 14: Mantel
- 15: Mindestabstand
- 16: Stab- oder Steggitter
- 17: Kragen
- 18: Stapelrippen
- 19: Kragen
- 20: Handgriffe
- 21: Kanal
- 22: Kragen
- 23: Pilzzapfen
- 24: Schlitze
- 25: Deckel
- 26: Biegelasche
- 27: Öffnung
- 28: Luftdurchlaßöffnungen
- 29: Drehverschluß
- 30: Durchbrüche

## Patentansprüche

1. Kompostierungskammer (1) für biologisch abbaubare Küchen-, Haus- und Gartenabfälle, bestehend aus einem in das belebte Erdreich eingrabbaren unteren Behälterteil (2) und aus einem über das Oberflächenniveau des Erdreichs hochragenden - als Haube gestalteten -, oberen Behälterteil (3), wobei der obere Behälterteil (3) oben eine durch einen abnehmbaren Deckel (25) verschließbare Einfüllöffnung (27) hat, während der untere Behälterteil (2) wenigstens bereichsweise zum umgebenden Erdreich hin für Kleinlebewesen, Feuchtigkeit und Luft durchlässig ist (8),
**dadurch gekennzeichnet,**
- daß der untere Behälterteil (2) einen geschlossenen Boden (5) aufweist und sein Mantel (6) erst mit einem Mindestabstand (7) oberhalb dieses Bodens (5) durchlässig ausgeführt ist (8),
- daß in den unteren Behälterteil (2) ein Zusatzbehälter oder Korb (4) herausnehmbar einzusetzen ist, der einen durchlässigen Boden (13) und einen ebenfalls durchlässigen Mantelbereich (16) hat,
- daß der Zusatzbehälter oder Korb (4) wenigstens teilweise mit seinem durchlässigen Mantelbereich (16) an den durchlässigen Mantelbereich (8) des unteren Behälterteils (2) anlegbar ist,
- und daß der bodennahe Bereich des unteren Behälterteils (2) eine Flüssigkeitssammel- und/oder -speicherwanne (9) bildet.

2. Kompostierungskammer nach Anspruch 1,
**dadurch gekennzeichnet,**
daß der Zusatzbehälter oder Korb (4) mit seinem Boden (13) oberhalb der Flüssigkeitssammel- und/oder -speicherwanne (9) gehalten ist (10, 18) und/oder die Flüssigkeitssammel- und/oder -speicherwanne (9) einen unterhalb dieses Bodens (13) gelegenen Überlauf (11) aufweist.

3. Kompostierungskammer (1) für biologisch abbaubare Haus- und Gartenabfälle, bestehend aus einem in das belebte Erdreich eingrabbaren, unteren Behälterteil (2) und aus einem über das Oberflächenniveau des Erdreiches hochragenden - als Haube gestalteten -, oberen Behälterteil (3), wobei der obere Behälterteil (3) oben eine durch einen abnehmbaren Deckel (25) oder dergleichen verschließbare Einfüllöffnung (27) hat, während der untere Behälterteil (2) wenigstens bereichsweise zum umgebenden Erdreich hin für Kleinlebewesen, Feuchtigkeit und Luft mit Durchlässen (8) versehen ist, insbesondere nach einem der Ansprüche 1 und 2,
**dadurch gekennzeichnet,**
- daß in den unteren Behälterteil (2) ein Zusatzbehälter oder Korb (4) herausnehmbar einzusetzen ist, der einen durchlässigen Boden (13) und einen ebenfalls durchlässigen Mantelbereich (16) hat,
- und daß der Zusatzbehälter oder Korb (4) mit mindestens einer sich in seiner Höhenrichtung erstreckenden Luftführung (21), z. B. einem mittleren und/oder mehreren am Umfang liegenden Kanälen (21) ausgestattet ist, die sich durch seinen Boden (13) bis zu einer Flüssigkeitssammel- und/oder -speicherwanne (9) des unteren Behälterteils (2) erstreckt bzw. erstrecken.

4. Kompostierungskammer nach einem der Ansprüche 1 bis 3,
**dadurch gekennzeichnet,**
daß der Zusatzbehälter oder Korb (4) am unteren Behälterteil (2) über jeweils deren Oberrand zugeordnete Kragen (17 und 19) und/oder Abstandshalter (10, 18) abstützbar ist.

5. Kompostierungskammer nach einem der Ansprüche 1 bis 4,
**dadurch gekennzeichnet,**
daß der Zusatzbehälter oder Korb (4) an seinem oberen Ende mit Handgriffen (20) versehen ist.

6. Kompostierungskammer nach einem der Ansprüche 1 bis 5,
**dadurch gekennzeichnet,**
daß die durchlässigen Bereiche (8) des unteren Behälterteils (2) und des Zusatzbehälters oder Korbes (4) aus Stab- oder Steggittern bestehen.

7. Kompostierungskammer nach einem der Ansprüche 1 bis 6,
**dadurch gekennzeichnet,**
daß die Flüssigkeitssammel- und/oder -speicherwanne (9) im unteren Behälterteil (2) mit einem Überlauf vorgesehen ist, z.B. durch Rippen oder Stege (10) in mehrere nebeneinanderliegende Bereiche unterteilt ist, die ein den Boden (5) durchdringendes Zentralrohr (11) als gemeinsamen Überlauf haben.

8. Kompostierungskammer nach einem der Ansprüche 1 bis 7,
**dadurch gekennzeichnet,**
daß wenigstens der Zusatzbehälter oder Korb (4) mit dem haubenartigen, oberen Behälterteil (3) durch Verschlußmittel (23, 24), z. B. Bajonett- oder Klapphebelverschlüsse, lösbar zu kuppeln ist.

9. Kompostierungskammer nach einem der Ansprüche 1 bis 8,
**dadurch gekennzeichnet,**
daß wenigstens der haubenartige, obere Behälterteil (3) die Form eines sich nach oben verjüngenden Kegelstumpfes hat.

10. Kompostierungskammer nach einem der Ansprüche 1 bis 9,
**dadurch gekennzeichnet,**
daß der abnehmbare Deckel (25) des oberen Behälterteils (3) mit Luftdurchlaßöffnungen (28) versehen ist, die durch einen Drehverschluß, z. B. eine Drehrosette (29) öffen- und verschließbar sowie in ihrem Durchlaßquerschnitt variierbar sind.

11. Kompostierungskammer nach einem der Ansprüche 1 bis 10,
**dadurch gekennzeichnet,**
daß der untere Behälterteil (2) wie auch der Zusatzbehälter oder Korb (4) die Form eines sich nach unten verjüngenden Kegelstumpfes aufweist.

12. Kompostierungskammer nach einem der Ansprüche 1 bis 11,
**dadurch gekennzeichnet,**
daß die Luftführung bzw. Kanäle des Zusatzbehälters oder Korbes (4) mit oberhalb des Erdreiches gelegenen Lufteinlässen, z. B. des unteren Behälterteils (2), in Verbindung bringbar sind.

13. Kompostierungskammer nach einem der Ansprüche 1 bis 12,
**dadurch gekennzeichnet,**
daß der untere Behälterteil (2), der obere Behälterteil (3) und der Zusatzbehälter oder Korb (4) aus Kunststoffmaterial bestehen.
